(19) Europäisches Patentamt
European Patent Office
Office européen des brevets

(11) **EP 4 231 272 A1**

(12) **EUROPEAN PATENT APPLICATION**
published in accordance with Art. 153(4) EPC

(43) Date of publication:
**23.08.2023 Bulletin 2023/34**

(21) Application number: **20957733.7**

(22) Date of filing: **16.10.2020**

(51) International Patent Classification (IPC):
**G09C 1/00** *(2006.01)*

(52) Cooperative Patent Classification (CPC):
**G09C 1/00**

(86) International application number:
**PCT/JP2020/039119**

(87) International publication number:
**WO 2022/079904 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nippon Telegraph And Telephone Corporation**
**Chiyoda-ku**
**Tokyo 100-8116 (JP)**

(72) Inventors:
• **MISHINA, Ibuki**
**Musashino-shi, Tokyo 180-8585 (JP)**
• **HAMADA, Koki**
**Musashino-shi, Tokyo 180-8585 (JP)**
• **IKARASHI, Dai**
**Musashino-shi, Tokyo 180-8585 (JP)**
• **KIKUCHI, Ryo**
**Musashino-shi, Tokyo 180-8585 (JP)**

(74) Representative: **Murgitroyd & Company**
**Murgitroyd House**
**165-169 Scotland Street**
**Glasgow G5 8PL (GB)**

(54) **PARAMETER ESTIMATION DEVICE, PARAMETER ESTIMATION SYSTEM, PARAMETER ESTIMATION METHOD, AND PROGRAM**

(57) A parameter estimation device for executing a parameter estimation of a cox proportional hazard model by secure computation comprises:
a data storage unit that stores a database having, with respect to each object to be observed, a record including a point of time at which an event was observed, a feature amount of an object to be observed at the point of time, and a state of the object to be observed at the point of time;
a calculation unit that, by reading a vector comprising points of time from the database, and sorting the vector, generates a replacement table and a flag indicating a boundary between the points of time, by using the replacement table and the flag, totalizes the feature amounts at the respective points of time while concealing values at the points of time, and performs the parameter estimation on the basis of a result of the totalization; and
an output unit that outputs a parameter estimated by the calculation unit.

Fig. 6

```
Algorithm 1 SECURE COMPUTATION COX PROPORTIONAL HAZARD REGRESSION
1: Require: M × N FEATURE AMOUNT MATRIX [Z], M-TH ORDER STATE VECTOR [c],
         M-TH ORDER TIME VECTOR [t], A NUMBER OF LEARNING TIMES α
2: Ensure: N-TH ORDER WEIGHT VECTOR [β]
3:   [β] ← fill([0], n)
4:   [π], [e] ← groupByCommon([t])
5:   [Z'] ← sort([Z], [π])
6:   [c'] ← sort([c], [π])
7:   ○ CALCULATION OF SUM [S] OF FEATURE AMOUNTS OF DEATH EXAMPLES AT EACH POINT OF TIME
8:   [Z'_{dead}] ← [Z'] × [c']
9:   [S] ← groupBySum([Z'_{dead}], [e])
10:  ○ CALCULATION OF THE NUMBER OF DEATH [D] AT EACH POINT OF TIME
11:  [d] ← groupBySum([c'], [e])
12:  ○ CALCULATION OF zz^T
13:  [ZZ'] ← [Z'][Z']^T
14:  ○ UPDATE OF [β]
15:  for i = 0, 1, ···, α − 1 do
16:     [g], [H] ← calcGH([β], [Z'], [S], [ZZ'], [d], [e])
17:     [β] ← [β] + [H]^{-1}[g]
```

EP 4 231 272 A1

**Description**

[Technical Field]

The present invention relates to a technique for implementing parameter estimation of a cox proportional hazard model while keeping confidentiality in a secure computation technique.

[Background Art]

A cox proportional hazard regression which is a regression analysis using a proportional hazard model of cox is an analysis method (NPL 1) frequently used in survival time analysis. In commercial statistical analysis software, or a package of software language, cox proportional hazard regression can be performed in plain text.

A method called secure computation is known as a method to obtain a specific calculation result without restoring the encrypted numerical value. As an example, by encrypting numerical fragments by distributing them among several secure computation devices and having multiple secure computation devices perform cooperative computation, the results of addition, subtraction, constant addition, results of addition and subtraction, constant addition, multiplication, constant multiplication, logical operations (negation, logical product, logical sum, and exclusive disjunction), and data format conversion (integers and binary numbers), etc. can be obtained in a distributed manner in several secure computation devices, without restoring numerical values.

[Citation List]

[Non Patent Literature]

[NPL 1] D.R.Cox, "Regression Models and Life-Tables", Journal of the Royal Statistical Society. Series B (Methodological), Vol. 34, No. 2. (1972), pp. 187-220.

[Summary of Invention]

[Technical Problem]

When the parameter estimation of the cox proportional hazard model is performed, calculation is repeated every point of time when death or truncation occurs in a plain text. However, in the case of using the same method in the secure computation, there is a problem that it is necessary to decode the value at the point of time that should be kept secret. In addition, since the calculation of parameter estimation of the cox proportional hazard model includes many processes such as an exponent, division, and group-by sum, which are high in processing cost, and it is difficult to efficiently calculate by secure computation.

The present invention has been made in view of the above-mentioned points, and an object of the present invention is to provide a technique for efficiently performing parameter estimation of a cox proportional hazard model without decoding values at the point of time.

[Solution to Problem]

According to the disclosed technique, a parameter estimation device, which executes a parameter estimation of a cox proportional hazard model by secure computation comprises:

a data storage unit that stores a database having, with respect to each object to be observed, a record including a point of time at which an event was observed, a feature amount of an object to be observed at the point of time, and a state of the object to be observed at the point of time;

a calculation unit that, by reading a vector comprising points of time from the database, and sorting the vector, generates a replacement table and a flag indicating a boundary between the points of time, by using the replacement table and the flag,

totalizes the feature amounts at the respective points of time while concealing values at the points of time, and performs the parameter estimation on the basis of a result of the totalization; and

an output unit that outputs a parameter estimated by the calculation unit.

[Advantageous Effects of Invention]

According to the disclosed technique, there is provided a technique for efficiently performing parameter estimation of a cox proportional hazard model without decoding a value at a point of time.

[Brief Description of Drawings]

[Fig. 1] Fig. 1 is a configuration diagram of a parameter estimation device according to an embodiment of the present invention.
[Fig. 2] Fig. 2 is a diagram showing an example of a device hardware configuration.
[Fig. 3] Fig. 3 is a diagram for explaining a replacement table.
[Fig. 4] Fig. 4 is a diagram for explaining a flag.
[Fig. 5] Fig. 5 is a diagram showing an example of a database.
[Fig. 6] Fig. 6 is a diagram for explaining an example of a processing procedure of a parameter estimation device.
[Fig. 7] Fig. 7 is a diagram for explaining an example of a processing procedure of a parameter estimation device.

[Description of Embodiments]

Hereinafter, an embodiment of the present invention (the present embodiment) will be described with reference to the drawings. The embodiment to be described below is merely exemplary and embodiments to which the present invention is applied are not limited to the following embodiment.

(Device Configuration Example)

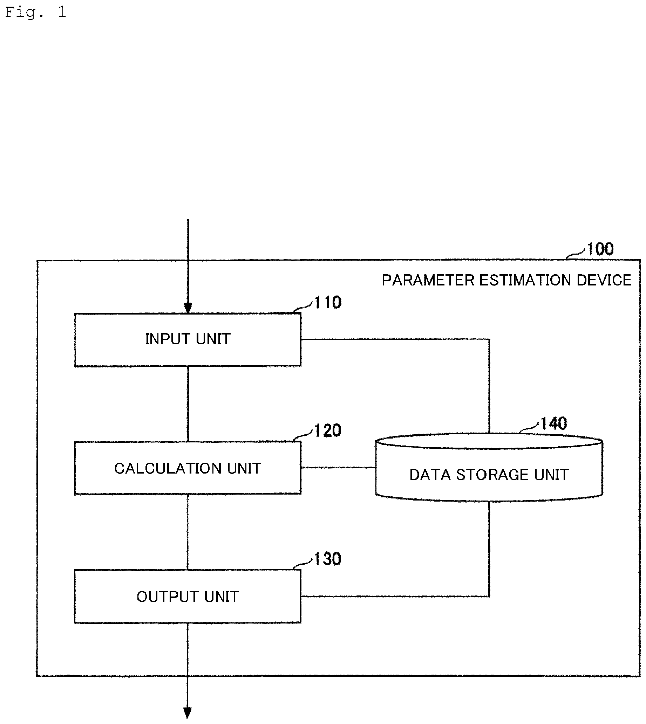

Fig. 1 illustrates a configuration example of the parameter estimation device 100 according to the present embodiment. The parameter estimation device 100 according to the present embodiment is provided with a input unit 110, a calculation unit 120, a output unit 130, and a data storage unit 140, as illustrated in Fig. 1.

The parameter estimation device 100 may be constituted by one device (computer), or constituted by a system consisting of a plurality of computers. This system may be called a parameter estimation system. In the parameter estimation system, for example, the calculation unit 120 and the data storage unit 140 may be separate servers.

Concealed data from data obtained by observation is input to an input unit 110 of the parameter estimation device 100. Unless otherwise stated, the data handled by the parameter estimation device 100 is concealed data, and calculation shall be performed by secure computation.

The input data is stored in the data storage unit 140 as a database. The calculation unit 120 performs parameter estimation of the cox proportional hazard model by performing processing to be described later on data such as scalar, vector, matrix and the like read from the database of the data storage unit 140. The output unit 130 outputs a parameter estimated by the calculation unit 120.

The parameters calculated by the calculation unit 120 may be stored in the data storage unit 140 and output from the output unit 130 in response to an external access. The processing details by the calculation unit 120 will be described later.

(Hardware Configuration Example)

The parameter estimation device 100 in the present embodiment can be realized by, for example, causing a computer to execute a program describing details of processing described in the present embodiment. Note that this "computer" may be a physical machine, or may be a virtual machine in the cloud. When a virtual machine is used, "hardware" described here is virtual hardware.

The program can be recorded on a computer-readable recording medium (a portable memory or the like) to store or distribute the program. It is also possible to provide the program through a network such as the Internet or e-mail.

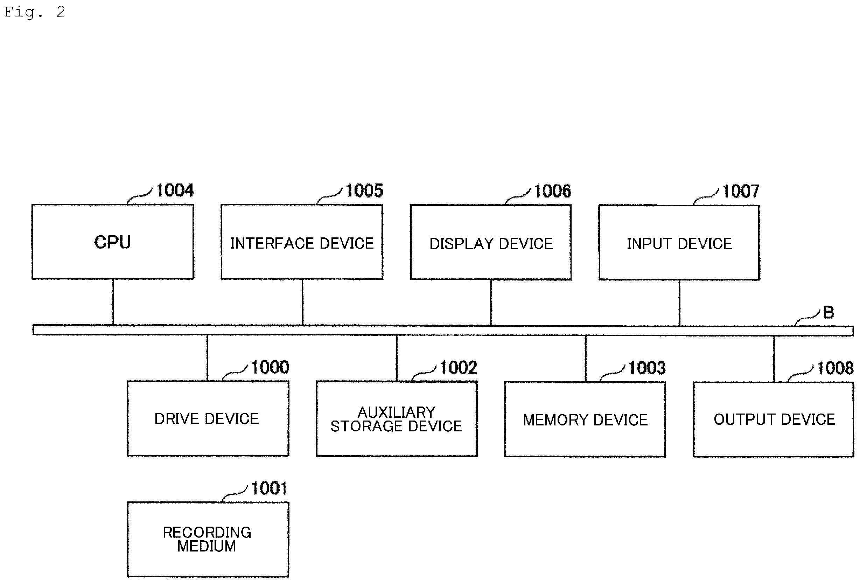

Fig. 2 is a diagram showing a hardware configuration example of the above computer. The computer shown in Fig. 2 has a drive device 1000, an auxiliary storage device 1002, a memory device 1003, a CPU 1004, an interface device 1005, a display device 1006, an input device 1007, an output device 1008, and the like, which are connected to each other by a bus.

A program for realizing processing in the computer is provided by, for example, a recording medium 1001 such as a CD-ROM or a memory card. When the recording medium 1001 having the program stored therein is set in the drive device 1000, the program is installed in the auxiliary storage device 1002 from the recording medium 1001 via the drive device 1000. However, the program does not necessarily have to be installed from the recording medium 1001, and may be downloaded from another computer via a network. The auxiliary storage device 1002 stores the installed program and also stores necessary files, data, and the like.

The memory device 1003 reads and stores the program from the auxiliary storage device 1002 when the start instruction of the program is received. The CPU 1004 realizes a function related to the parameter estimation device 100 according to a program stored in the memory device 1003. The interface device 1005 is used as an interface for connecting to a network. The display device 1006 displays GUI (Graphical User Interface) and the like by the program. The input device 1007 is configured of a keyboard, a mouse, buttons, a touch panel, and the like, and is used for inputting various operation instructions. The output device 1008 outputs a calculation result.

(Preparation)

Before describing an example of operation of the parameter estimation device 100, notation, cox proportional hazard regression, secure computation and the like will be described as preparation.

<Notation>

Defining a by b is described as $a := b$, vector is described as $\to a := (a_0, ..., a_{n-1})$, unless otherwise specified, matrix is described as capital letter such as A, and a transposed matrix of that matrix is described as $A^T$. In the text of the present specification, for convenience of description, the vector symbol $(\to)$ to be placed above the beginning of the character is described before the character, such as "$\to a$". Further, in the algorithm described in the drawing, tensor of third floor is described in italic characters. In the text of the present specification, for convenience of description, characters of tensor of third floor are represented, for example, by attaching a $^{tensor}$ to the upper left of the characters, as shown by $^{tensor}ZZ$'.

In addition, subtraction and multiplication, when the input is a vector $\to a$ or a matrix A and a scalar b, it is assumed that the operation with b is performed on all the elements of $\to a$ and A. The vector not specifically described is a column vector. In the case of a row vector, it is distinguished by adding t at the upper left like $^t\to a$.

<cox proportional hazard regression>

The cox proportional hazard model is a model represented by the equation (1) (NPL 1).
[Math. 1]

$$\lambda(t|\vec{z}) = \lambda_0(t) \exp(\vec{\beta}^\top \vec{z}) \qquad (1)$$

In equation (1), t, β, and z represent time, weight, and feature amount, respectively, and $\lambda_0(t)$ and $\exp(\to\beta^T \to z)$ are called baseline hazard function and relative risk function (hazard), respectively. In cox proportional hazards regression, the weight parameter β is estimated. The weight is calculated by performing maximum likelihood estimation using the part likelihood shown in equation (2).
[Math. 2]

$$L(\vec{\beta}) = \prod_{i=1}^{D} \left[ \frac{\exp(\vec{\beta}^\top \vec{z_i})}{\sum_{j \in R_i} \exp(\vec{\beta}^\top \vec{z_j})} \right] \qquad (2)$$

In equation (2), D is the number of a point of time when death was observed, and $\to z_i$ represents the feature amount of the patient who died at point of time i. In this embodiment, death is used as an objective event, but this is an example. For example, the event may be for the purpose of falling, inability to walk, onset of illness, hospitalization, or the like. Truncation may be interpreted as one of the events.

$R_i$ in equation (2) is a set of patients who have not been truncated or died until just before a point of time i, and is called a risk set. In addition, "truncation" means that observation becomes impossible and it becomes unknown whether or not death has occurred after that.

Therefore, the part likelihood function of equation (2) is calculated by calculating (hazard of deceased patient) / (sum of hazards of risk set) for each point of time and multiplying by all points of time. Since this part likelihood is based on the assumption that multiple truncations and deaths do not occur at the same time (no tie data), the actual data that often has tie data is the Breslow method shown in equation (3) is often used.

[Math. 3]

$$L(\vec{\beta}) = \prod_{i=1}^{D} \left[ \frac{\exp(\vec{\beta}^\top \vec{s_i})}{\{\sum_{j \in R_i} \exp(\vec{\beta}^\top \vec{z_j})\}^{d_i}} \right] \quad (3)$$

Equation (3) is basically the same as the part likelihood of cox in equation (2), but the denominator is $d_i$-th power ($d_i$ is the number of dead patients at point of time i), and the difference is that the sum $s_i$ of the feature amount of the dead patients at point of time i is used instead of $\rightarrow z_i$ in the numerator. Since the case of $d_i = 1$ agrees with the equation (2), the equation (3) can be considered as a generalized form of the equation (2). In the following description, equation (3) is premised.

The Newton method or the like is generally used as a method for obtaining the maximum likelihood estimation of $\rightarrow \beta$. In this embodiment, the Newton method is used. In Newton's method, after the equation (3) is transformed into a log-likelihood function, the calculation is performed using the first-order derivative (gradient) and the second-order derivative (hessian) of the log-likelihood function. The log-likelihood function l ($\rightarrow \beta$), its first derivative U($\rightarrow \beta$), and its second derivative I($\rightarrow \beta$) are shown in equation (4), equation (5), and equation (6), respectively.

[Math. 4]

$$l(\vec{\beta}) = \sum_{i=1}^{D} \left\{ \vec{\beta}^\top \vec{s_i} - d_i \log \sum_{j \in R_i} \exp(\vec{\beta}^\top \vec{z_j}) \right\} \quad (4)$$

[Math. 5]

$$U(\vec{\beta}) = \sum_{i=1}^{D} \left[ \vec{s_i} - \frac{d_i \sum_{j \in R_i} \vec{z_j} \exp(\vec{\beta}^\top \vec{z_j})}{\sum_{j \in R_i} \exp(\vec{\beta}^\top \vec{z_j})} \right] \quad (5)$$

[Math. 6]

$$I(\vec{\beta}) = \sum_{i=1}^{D} d_i \left[ \frac{\sum_{j \in R_i} \vec{z_j}\vec{z_j}^\top \exp(\vec{\beta}^\top \vec{z_j})}{\sum_{j \in R_i} \exp(\vec{\beta}^\top \vec{z_j})} - \frac{\{\sum_{j \in R_i} \vec{z_j} \exp(\vec{\beta}^\top \vec{z_j})\}\{\sum_{j \in R_i} \vec{z_j} \exp(\vec{\beta}^\top \vec{z_j})\}^\top}{\{\sum_{j \in R_i} \exp(\vec{\beta}^\top \vec{z_j})\}^2} \right]$$

$$(6)$$

In Newton's method, the following equation (7) is repeated using equations (5) and (6) to obtain the maximum likelihood estimation value of $\rightarrow \beta$. Equation (7) converges after about 5 iterations.

[Math. 7]

$$\vec{\beta} = \vec{\beta} + I(\vec{\beta})^{-1} U(\vec{\beta}) \quad (7)$$

<Secure Computation>

A value that is concealed a value of a by encryption, secret sharing or the like is called a ciphertext or concealed value, is described as [a]. When a is concealed by secret sharing, a set of secret sharing fragments, which is had by each secure computation device, is referred by the [a]. Further, the parenthesis "[", "]" indicating that they are ciphertexts are slightly different from the format of the parentheses in the mathematical formulas inserted in the drawings and the specification, but in the specification text, for convenience of description "[", "]".

Next, various calculations in the secure computation will be described.

■four arithmetic operations

Addition, subtraction, and multiplication of two ciphertexts [a] and [b] are processes for calculating ciphertexts [a + b], [a - b], and [a x b], respectively. These calculations are described as [a] + [b], [a] - [b], and [a] x [b], respectively.

Further, the process of dividing the ciphertext [a] by the plaintext b uses a notation such as [a] / b. When the input is a vector or a matrix and these processes are performed for each element, the notation is similarly [→a] + [→b], [A] + [B] .

When the input is the matrix a and the column vector ->b in the addition, subtraction and multiplication, the arithmetic operation of each element ->b is performed for each column vector of the matrix, and when the input is the matrix a and the row vector $^t$→b, the arithmetic operation of each element $^t$→b is performed for each row vector of the matrix.

■Sum

The process of finding the sum of the elements of the vector [→a] is described as sum ([→a]). When the matrix of m × n is sum input as in sum ([A]), the sum in the column direction is calculated and the row vector [t→c] of length n is output.

■Prefix Sub

The calculation of the vector such as ([b], [b] - [a_1], [b] - ([a_1] + [a_2]), ..., [b] - Σ[→a]) is described as prefixSub ([→a], [b]), from vector [→a] := ([a_1], [a_2], ..., [a_n]) and scalar [b].

■Reciprocal

The calculation of the reciprocal 1 / [a] of the ciphertext [a] is described as [c]←reciprocal([a]). The same notation is used when the input is a vector.

■Exponent

Entering the ciphertext [a] and calculating the [a] power of the Napier number e is described as [c]←exp([a]). The same notation is used when the input is a vector.

■Group-by common

Group-by common is a process for generating intermediate data that can be commonly used in various Group-by operations such as Group-by sum and Group-by count. The intermediate data includes a replacement table [→π] and a flag [→e] indicating whether the value of the key is a boundary or not, and by reusing these, various Group-by operations using the same key can be performed efficiently.

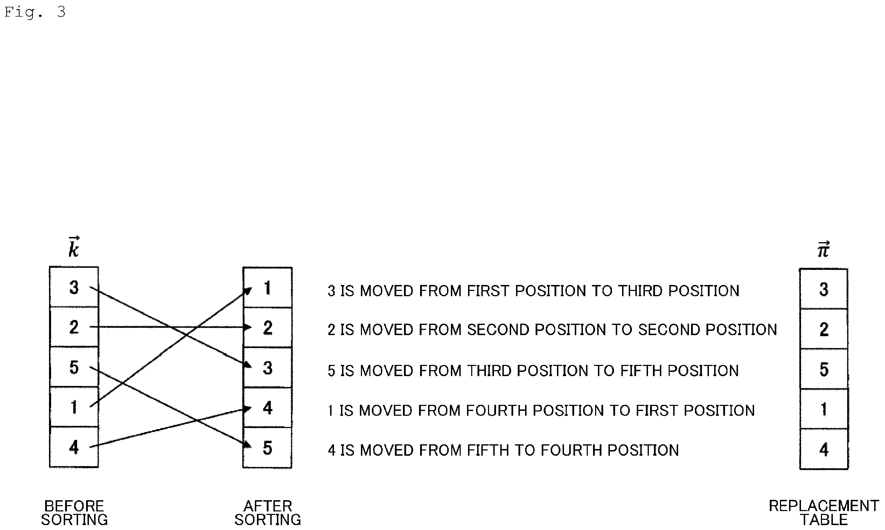

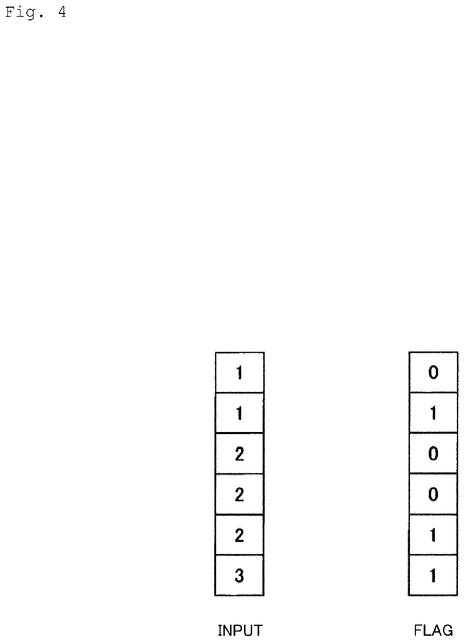

With reference to FIGS. 3 and 4, examples of the replacement table →π obtained by the operation of Group-by common and the flag ->e will be described. Here, for convenience of explanation, it will be described as plaintext processing.

The replacement table →π is a vector indicating how each element in the vector inputted to Group-by common move to what number of elements the element of the vector is sorted.

In Fig. 3, when a vector →k is input to Group-by common, the vector is sorted, and a replacement table →π as shown in Fig. 3 is obtained. For example, 3 which is the first element of the replacement table →π indicates that the first element of the input vector →k can be sorted if it is the third element.

The flag ->e is a vector in which 0 is input to the position of the element for each element of the sorted vector of the vector input to the Group-by common if the value is the same the value below the element by comparison, and 1 is input to the position of the element if the value is different from the value below the element. Fig. 4 shows an example of the input and the flag. As shown in Fig. 4, since the last flag cannot be compared with the lower value, "1" is set.

The Group-by Common is performed by inputting the vector of the key [→k] is described as shown by the equation (8). The process of sorting the vector [→a] and the matrix [A] (the number of rows is equal to the length of [→π]), using the replacement table [→π] is described as in equations (9) and (10) .

It is described as in equations (11) and (12) that Group-by sum is performed using the sorted vectors [→a'] and [A'] and [→e]. Primes such as [→a'] and [A'] indicate that they have been sorted, and the same notation is used thereafter.

[Math. 8]

$$\llbracket \vec{\pi} \rrbracket, \llbracket \vec{e} \rrbracket \leftarrow \mathsf{groupByCommon}(\llbracket \vec{k} \rrbracket) \qquad (8)$$

[Math. 9]

$$\llbracket \vec{a'} \rrbracket \leftarrow \mathsf{sort}(\llbracket \vec{a} \rrbracket, \llbracket \vec{\pi} \rrbracket) \qquad (9)$$

[Math. 10]

$$\llbracket A' \rrbracket \leftarrow \mathsf{sort}(\llbracket A \rrbracket, \llbracket \vec{\pi} \rrbracket) \qquad (10)$$

[Math. 11]

$$\llbracket \vec{c} \rrbracket \leftarrow \mathsf{groupBySum}(\llbracket \vec{a'} \rrbracket, \llbracket \vec{e} \rrbracket) \qquad (11)$$

[Math. 12]

$$\llbracket C \rrbracket \leftarrow \mathsf{groupBySum}(\llbracket A' \rrbracket, \llbracket \vec{e} \rrbracket) \qquad (12)$$

In the case of the input of sort or groupBySum is a matrix, the processing is performed for each column. Although the size of the output is generally equal to or less than the size of the input by performing Group-by sum, in the present embodiment, the sizes of the input and the output are the same, and the unnecessary portion is padded at the tail with zero. This makes it possible to conceal the number of attributes of key of point of time. In the explanation of the process described later, for convenience, the result of Group-by sum is described as "a vector whose length is the number of points of time" or "a matrix of the number of points of time x n", in fact, to correspond to "a vector whose length is the number of records" and "a matrix with the number of records x n", the unnecessary part is padded to 0.

For example, assuming that the flag →e shown in Fig. 4 is described as (0, 1, 0, 0, 1, 1) and →a' is (2, 1, 3, 5, 1, 2), the Group-by sum, which is input →a' and →e, is (2 + 1, 3 + 5 + 1, 2, 0, 0, 0) = (3, 9, 2, 0, 0, 0).

(Operation of Parameter Estimation Device 100)

The operation example of the parameter estimation device 100 will be described below. The calculation unit 120 of the parameter estimation device 100 reads the ciphertext data stored in the data storage unit 140 (database), and calculates the above-mentioned equation (5), equation (6), and equation (7) by secure computation, and then, the parameters of the cox proportional hazard regression are estimated. In the following, first, the characteristic operation will be described.

<All Records Are Processed Collectively>

When the equations (5) and (6) are mounted as they are, the calculation is repeated at each point of time, and the calculation results are added in order. In the case of calculating the secure computation cox proportional hazard regression, previously mentioned groupByCommon and groupBySum are used in order to keep the number of points of time secret.

In groupByCommon and groupBySum, totalization is performed for each point of time while keeping the value of the point of time secret, and since unnecessary parts are padded at zero, information on the number of points of time is not leaked.

Further, by processing all the records collectively instead of repeating the processing for each number of points of time, the number of operations having a large processing cost in the secure computation can be reduced and the processing efficiency is good. That is, $\Sigma_{j\square Ri}\exp(\to\beta^T\to z_j)$ for all points of time is calculated at once, instead of calculation, for example, that $\Sigma_{j\square Ri}\exp(\to\beta^T\to z_j)$ is calculated at point of time 1, and $\Sigma_{j\square Ri}\exp(\to\beta^T\to z_j)$ is calculated at point of time 2, and .... More specifically, when the value at each point of time is a scalar, the length is treated as a vector of the number of points of time and calculated collectively, and when the value at each point of time is a vector with length n, it is treated and calculated all together as a matrix of the number of points of time × n. If the value at each point of time is an n × n matrix, it is treated as a tensor of third floor with the number of points of time × n × n and calculated collectively.

<Reduction of Operations with Large Processing Cost>

Equation (5) and equation (6) include many exponentiations and divisions, and since the processing of $\Sigma_{j\square Ri}$ is Group-by sum, the calculation cost in secure computation is very large.

The parameter estimation device 100 according to the present embodiment minimizes costly processing such as exp, division, and Group-by sum in cox proportional hazard regression, and calculates efficiently. When simply calculated according to equation (5) and equation (6), exponentiation is required for 7 times × number of points of time and division is required for 3 times × number of points of time per iteration of Newton's method, but in this embodiment, the number of points of time was minimized as follows.

- Calculation of exp is once per one iteration
- Calculation of reciprocal is once per one iteration Also, for Group-by sum, the processing is divided into groupBy-Common and groupBySum, so that the processing is more efficiently performed. The reduction of these calculations will be described in more detail.

■Reduction of exp

As shown in the expression (5) and expression (6), since all the arguments of EXP are $\to\beta^T\to z_J$, it is sufficient to reuse the arguments once calculated. In addition to this, processing is made parallel by collectively processing all the records, and it is possible to complete the processing once per iteration.

■Reduction of Division

When division is performed by reciprocal calculation + multiplication, the reciprocal of $\Sigma_{j\square Ri}\exp(\to\beta^T\to z_j)$ can be reused in the second term of equation (5) and the first term of equation (6), and only need to calculate the once reciprocal + twice multiplication instead of dividing twice. The second term of equation (6) has a different divisor from the above two, but this term can be obtained without division. Comparing the second term of the formula (5) and the second term of the formula (6), when the part excluding the di of the second term of the formula (5) is A, the second term of the formula (6) Since the term can be expressed by AAT, the second term of equation (6) can be calculated only by the product. In addition to this, by processing all the above-mentioned records at once, the processing is parallelized, and only once per iteration is required.

■Reduction of Group-by sum

If implemented according to equation (5) and equation (6), Group-bysum will be performed many times during processing, and processing efficiency will decrease. Therefore, in the present embodiment, paying attention to the fact that all the keys are the same, it is decided to reuse [$\to e$] obtained by Group-bycommon which was performed only once for the key at the beginning.

In the parameter estimation device 100 of the present embodiment, the Group-by common is utilized to efficiently calculate the secure computation cox proportional hazard regression. In the calculation of groupBySum, only the totalization using the flag [$\to e$] indicating the boundary is performed.

<Detailed Processing Details>

Next, details of the processing executed by the parameter estimation device 100 will be described. Here, it is assumed that the concealed observation data is stored as a database in a data storage unit 140, and a calculation unit 120 estimates a parameter of the cox proportional hazard regression by processing the data by secure computation. In the processing operation, the above-mentioned characteristic operation is performed.

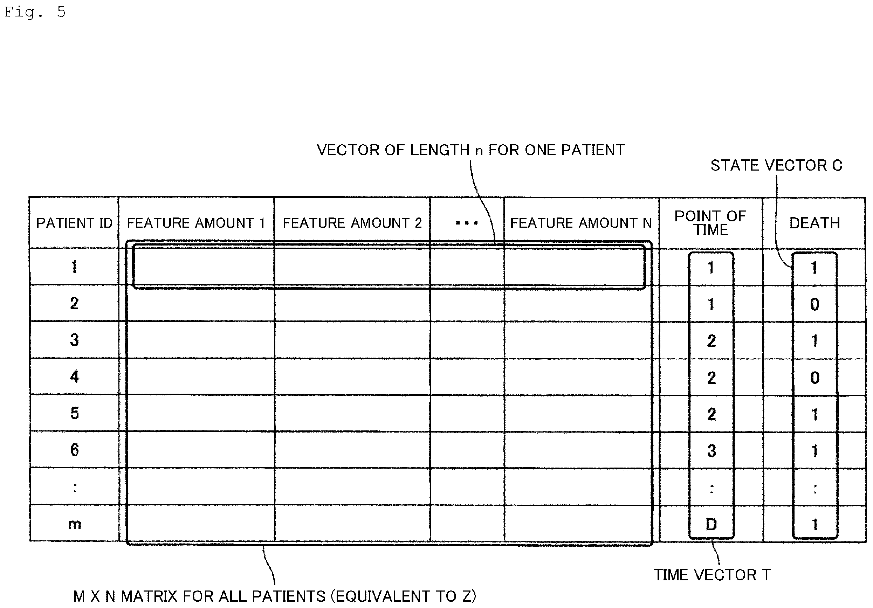

Fig. 5 shows an image of the database to be processed by the calculation unit 120. Fig. 5 shows the data in a plaintext and shows the sorted state in the ascending order of the points of time for convenience of explanation.

As shown in Fig. 5, the database contains n feature amounts, the time of observation, and the state at that time (death = 1, truncation = 0) for each patient (observation target) with a number of patients m is stored. m is also the number of records, and D is the number of the points of time. For example, if the time vector $\rightarrow t$ = (1, 1, 1, 2), the number of the point of time is 2.

In the example of Fig. 5, in the case of death for one patient, the patient, the feature amount of the patient, the point of time, and the state are recorded in the database. In addition, for the patient who has been truncated at that time, the patient, the feature amount of the patient, the point of time, and the state are recorded in the database.

At the same time, death or truncation may be observed for a plurality of patients. Therefore, the number of points of time D $\square$ the number of patients m.

A calculation unit 120 reads the data from the database to hold the feature amount of all the patients as a matrix Z of M $\times$ N, a point of time as a time vector $\rightarrow t$, and a state of all the patients as a state vector $\rightarrow C$.

None of Z, $\rightarrow t$, and $\rightarrow c$ is sorted in the initial state. As mentioned above, by Group-by common, the time vector $\rightarrow t$ is first sorted to create a replacement table $\rightarrow \pi$, and by reusing it, and the sorting by the key of the feature amount Z or $\rightarrow t$ of state vector $\rightarrow c$ requires only sorting based on the substitution table $\rightarrow \pi$. That is, the cost is lower than that of normal sorting.

<Processing Procedure>

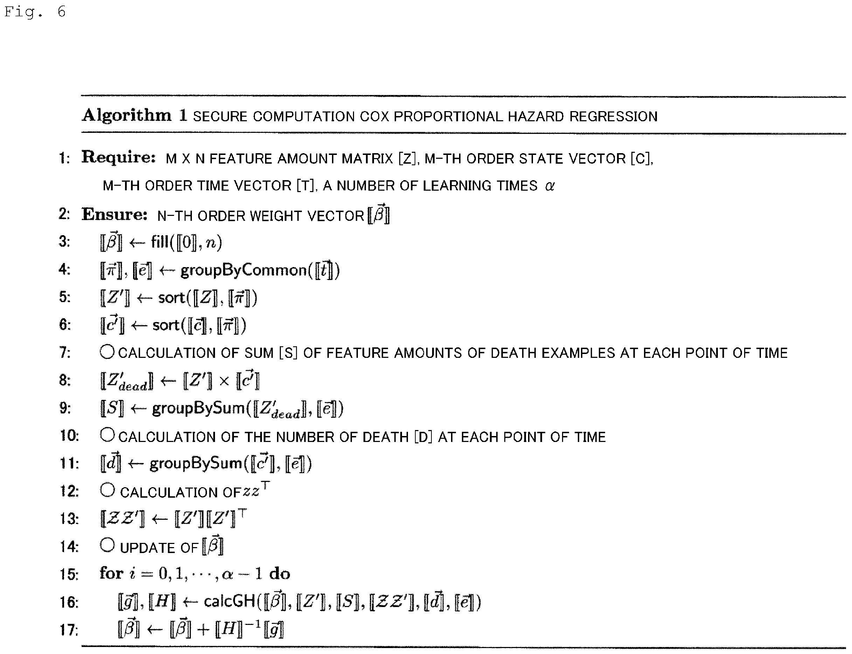

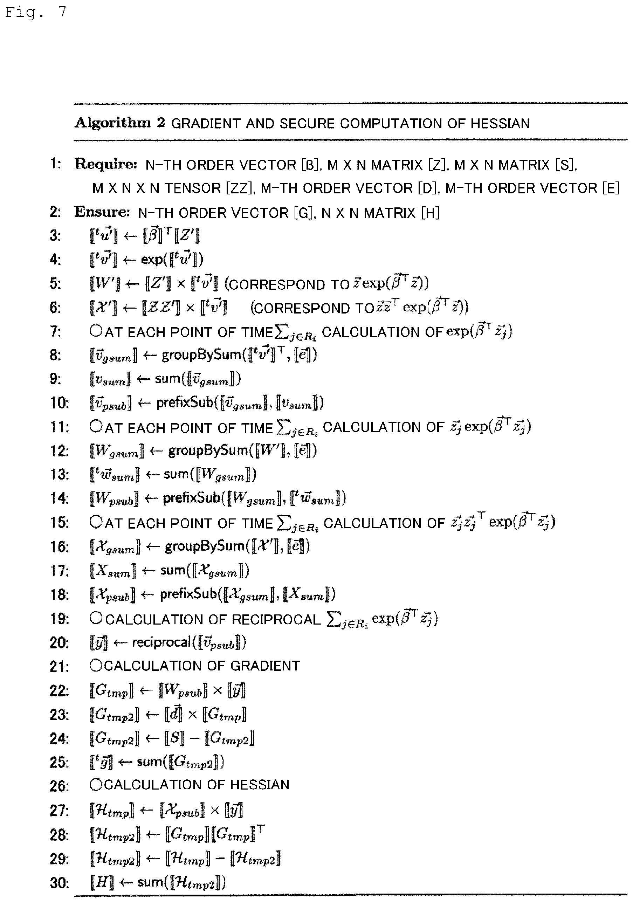

The calculation unit 120 of the parameter estimation device 100 estimates parameters of the data in the database according to the procedure of the algorithm shown in Figs. 6 and 7. In Figs. 6 and 7, row numbers are given for the purpose of explanation. The following description is made with the line number of the processing portion regarded as a step number.

In step 3 of the algorithm 1 of Fig. 6, the calculation unit 120 initializes the n-th order weight vector [$\rightarrow \beta$] with [0]. In step 4, by Group-by common, $\rightarrow t$ is sorted to create a replacement table $\rightarrow \pi$, and a flag $\rightarrow e$ is created.

In steps 5 and 6, the calculation unit 120 sorts [Z] and [$\rightarrow c$], respectively, to create [Z'] and [$\rightarrow c'$].

In step 8, the calculation unit 120 creates [Z'$_{dead}$] which sets all feature amounts other than the dead cases feature amounts from [Z'] to 0, and in step 9, [S] of the sum of the features of the dead cases at each point of time by groupBySum is created. In step 11, the number of deaths [$\rightarrow d$] at each point of time is calculated. In step 13, [$^{tensor}ZZ'$], which is an m $\times$ n $\times$ n tensor, is created, and [$\rightarrow \beta$] is updated in steps 15 to 17.

The processing of calcGH in step 16 will be described with reference to Fig. 7. In steps 3 to 6, the calculation unit 120 calculates [W'] corresponding to $\rightarrow z \exp(\rightarrow \beta^T \rightarrow z)$ and [tensorX'] corresponding to $\rightarrow z \rightarrow z^T \exp(\rightarrow \beta^T \rightarrow z)$. [$^T \rightarrow v'$] corresponding to $\exp(\rightarrow \beta^T \rightarrow z_j)$ calculated in step 4 is reused in the subsequent calculations.

In steps 8 to 10, the calculation unit 120 calculates [$\rightarrow v_{psub}$] corresponding to $\Sigma_{j \square Ri} \exp(\rightarrow \beta^T \rightarrow z_j)$ at each point of time. Each element of [$\rightarrow v_{psub}$], which is a vector of length of the number of points of time, has $\Sigma_{j \square Ri} \exp(\rightarrow \beta^T \rightarrow z_j)$ in a scalar value. That is, the calculation here is not an iterative process for each number of points of time, but a calculation that processes all records at once. In the calculation of [$W_{psub}$] and [$^{tensor}X_{psub}$] described below, all the records are processed together in the same manner.

In steps 12 to 14, the calculation unit 120 calculates [$W_{psub}$] corresponding to $\Sigma_{j \square Ri} \rightarrow z_j \exp(\rightarrow \beta^T \rightarrow z_j)$ at each point of time. In steps 16 to 18, the calculation unit 120 calculates [$^{tensor}X_{psub}$] corresponding to $\Sigma_{j \square Ri} \rightarrow z_j \rightarrow z_j^T \exp(\rightarrow \beta^T \rightarrow z_j)$ at each point of time.

In step 20, the calculation unit 120 calculates [$\rightarrow y$] corresponding to the reciprocal of $\Sigma_{j \square Ri} \exp(\rightarrow \beta^T \rightarrow z_j)$. This is the only part of the reciprocal calculation.

In steps 22 to 25, the calculation unit 120 calculates the equation (5) which is a gradient. [$\rightarrow y$] and [$\rightarrow d$] are vectors whose length is the number of points of time, [G], [W] and [S] are matrices of the number of points of time multiplexed by the number of feature amounts, and the calculation result [$^t \rightarrow g$] is a column vector whose length is the number of features. The sum of all points of time is calculated by sum in step 25.

In steps 27 to 30, the calculation unit 120 calculates the equation (6) which is a hessian. [$G_{tmp}$][$G_{tmp}$]$^T$ in step 29 corresponds to the above-mentioned AA$^T$.

(Effects of Embodiment)

According to the technique according to the present embodiment described above, it is possible to efficiently perform parameter estimation of the cox proportional hazard model without decoding the number of points of time.

That is, by processing all data at a time without performing repetitive processing such as processing in a conventional plaintext according to the technique of the present embodiment, the number of points of time can be calculated without decoding. Further, by reducing the repetition processing, processing such as division, exponent, and group-by sum which is high in processing cost in secure computation is parallelized, and the parameter estimation of the cox proportional hazard regression can be efficiently performed while keeping the data and the number of points of time secret.

(Conclusion of Embodiment)

At least the parameter estimation device, the parameter estimation system, the parameter estimation method, and the program are described in the present specification.

(Item 1)

A parameter estimation device, which executes a parameter estimation of a cox proportional hazard model by secure computation, a parameter estimation device comprising:

a data storage unit that stores a database having, with respect to each object to be observed, a record including a point of time at which an event was observed, a feature amount of an object to be observed at the point of time, and a state of the object to be observed at the point of time;

a calculation unit that, by reading a vector comprising points of time from the database, and sorting the vector, generates a replacement table and a flag indicating a boundary between the points of time, by using the replacement table and the flag, totalizes the feature amounts at the respective points of time while concealing values at the points of time, and performs the parameter estimation on the basis of a result of the totalization; and

an output unit that outputs a parameter estimated by the calculation unit.

(Item 2)

The parameter estimation device according to item 1, wherein the calculation unit executes a calculation of a plurality of exps in a calculation equation used in an iterative calculation for the parameter estimation by the calculation of exp once per iteration and a calculation using the calculation result.

(Item 3)

The parameter estimation device according to item 1 or 2, wherein
the calculation unit executes a calculation of a plurality of reciprocals in a calculation equation used in an iterative calculation for the parameter estimation by a calculation of a reciprocal once per iteration and a calculation using the calculation result.

(Item 4)

The parameter estimation device according to one of items 1 to 3, wherein
the calculation unit collectively executes a calculation for each point of time in the calculation equation used in an iterative calculation for the parameter estimation for all points of time using a vector, a matrix, or a tensor.

(Item 5)

A parameter estimation system, which executes a parameter estimation of a cox proportional hazard model by secure computation, a parameter estimation system comprising:

a data storage unit that stores a database having, with respect to each object to be observed, a record including a point of time at which an event was observed, a feature amount of an object to be observed at the point of time, and a state of the object to be observed at the point of time;

a calculation unit that, by reading a vector comprising points of time from the database, and sorting the vector, generates a replacement table and a flag indicating a boundary between the points of time, by using the replacement table and the flag, totalizes the feature amounts at the respective points of time while concealing values at the points of time, and performs the parameter estimation on the basis of a result of the totalization; and

an output unit that outputs a parameter estimated by the calculation unit.

(Item 6)

A parameter estimation method executed by a parameter estimation device that executes a parameter estimation of a cox proportional hazard model by secure computation, a parameter estimation method comprising:

a calculation step that reads a vector comprising points of time from the database having, with respect to each object to be observed, a record including a point of time at which an event was observed, a feature amount of an object to be observed at the point of time, and a state of the object to be observed at the point of time, and sorts the vector, generates a replacement table and a flag indicating a boundary between the points of time, by using the replacement table and the flag, totalizes the feature amounts at the respective points of time while concealing values at the points of time, and performs the parameter estimation on the basis of a result of the totalization; and
an output step that outputs a parameter estimated by the calculation step.

(Item 7)

The program that causes a computer to function as each unit of the parameter estimation device according to any one of items 1 to 4.

The embodiment has been described above, but the present invention is not limited to the specific embodiment. Various modifications and changes can be made within the scope of the gist of the present invention described in the claims.

[Reference Signs List]

| | |
|---|---|
| 100 | Parameter estimation device |
| 110 | Input unit |
| 120 | Calculation unit |
| 130 | Output unit |
| 140 | Storage unit |
| 1000 | Drive device |
| 1001 | Recording medium |
| 1002 | Auxiliary storage device |
| 1003 | Memory device |
| 1004 | CPU |
| 1005 | Interface device |
| 1006 | Display device |
| 1007 | Input device |
| 1008 | Output device |

**Claims**

1. A parameter estimation device, which executes a parameter estimation of a cox proportional hazard model by secure computation, a parameter estimation device comprising:

a data storage unit that stores a database having, with respect to each object to be observed, a record including a point of time at which an event was observed, a feature amount of an object to be observed at the point of time, and a state of the object to be observed at the point of time;
a calculation unit that, by reading a vector comprising points of time from the database, and sorting the vector, generates a replacement table and a flag indicating a boundary between the points of time, by using the replacement table and the flag,
totalizes the feature amounts at the respective points of time while concealing values at the points of time, and performs the parameter estimation on the basis of a result of the totalization; and
an output unit that outputs a parameter estimated by the calculation unit.

2. The parameter estimation device according to claim 1, wherein
the calculation unit executes a calculation of a plurality of exps in a calculation equation used in an iterative calculation for the parameter estimation by the calculation of exp once per iteration and a calculation using the calculation result.

3. The parameter estimation device according to claim 1 or 2, wherein
the calculation unit executes a calculation of a plurality of reciprocals in a calculation equation used in an iterative calculation for the parameter estimation by a calculation of a reciprocal once per iteration and a calculation using the calculation result.

4. The parameter estimation device according to one of claims 1 to 3, wherein
the calculation unit collectively executes a calculation for each point of time in the calculation equation used in an iterative calculation for the parameter estimation for all points of time using a vector, a matrix, or a tensor.

5. A parameter estimation system, which executes a parameter estimation of a cox proportional hazard model by secure computation, a parameter estimation system comprising:

   a data storage unit that stores a database having, with respect to each object to be observed, a record including a point of time at which an event was observed, a feature amount of an object to be observed at the point of time, and a state of the object to be observed at the point of time;
   a calculation unit that, by reading a vector comprising points of time from the database, and sorting the vector, generates a replacement table and a flag indicating a boundary between the points of time, by using the replacement table and the flag, totalizes the feature amounts at the respective points of time while concealing values at the points of time, and performs the parameter estimation on the basis of a result of the totalization; and
   an output unit that outputs a parameter estimated by the calculation unit.

6. A parameter estimation method executed by a parameter estimation device that executes a parameter estimation of a cox proportional hazard model by secure computation, a parameter estimation method comprising:

   a calculation step that reads a vector comprising points of time from the database having, with respect to each object to be observed, a record including a point of time at which an event was observed, a feature amount of an object to be observed at the point of time, and a state of the object to be observed at the point of time, and sorts the vector, generates a replacement table and a flag indicating a boundary between the points of time, by using the replacement table and the flag, totalizes the feature amounts at the respective points of time while concealing values at the points of time, and performs the parameter estimation on the basis of a result of the totalization; and
   an output step that outputs a parameter estimated by the calculation step.

7. The program that causes a computer to function as each unit of the parameter estimation device according to any one of claims 1 to 4.

Fig. 1

PARAMETER ESTIMATION DEVICE 100

INPUT UNIT 110

CALCULATION UNIT 120

DATA STORAGE UNIT 140

OUTPUT UNIT 130

Fig. 2

Fig. 3

$\vec{k}$

| 3 |
| 2 |
| 5 |
| 1 |
| 4 |

| 1 |
| 2 |
| 3 |
| 4 |
| 5 |

3 IS MOVED FROM FIRST POSITION TO THIRD POSITION

2 IS MOVED FROM SECOND POSITION TO SECOND POSITION

5 IS MOVED FROM THIRD POSITION TO FIFTH POSITION

1 IS MOVED FROM FOURTH POSITION TO FIRST POSITION

4 IS MOVED FROM FIFTH TO FOURTH POSITION

$\vec{\pi}$

| 3 |
| 2 |
| 5 |
| 1 |
| 4 |

BEFORE
SORTING

AFTER
SORTING

REPLACEMENT
TABLE

Fig. 4

| INPUT |
|:-:|
| 1 |
| 1 |
| 2 |
| 2 |
| 2 |
| 3 |

| FLAG |
|:-:|
| 0 |
| 1 |
| 0 |
| 0 |
| 1 |
| 1 |

Fig. 5

VECTOR OF LENGTH n FOR ONE PATIENT

STATE VECTOR C

| PATIENT ID | FEATURE AMOUNT 1 | FEATURE AMOUNT 2 | ... | FEATURE AMOUNT N | POINT OF TIME | DEATH |
|---|---|---|---|---|---|---|
| 1 | | | | | 1 | 1 |
| 2 | | | | | 1 | 0 |
| 3 | | | | | 2 | 1 |
| 4 | | | | | 2 | 0 |
| 5 | | | | | 2 | 1 |
| 6 | | | | | 3 | 1 |
| : | | | | | : | : |
| m | | | | | D | 1 |

TIME VECTOR T

M X N MATRIX FOR ALL PATIENTS (EQUIVALENT TO Z)

Fig. 6

---

**Algorithm 1** SECURE COMPUTATION COX PROPORTIONAL HAZARD REGRESSION

---

**Require:** M X N FEATURE AMOUNT MATRIX [Z], M-TH ORDER STATE VECTOR [C],

M-TH ORDER TIME VECTOR [T], A NUMBER OF LEARNING TIMES $\alpha$

**Ensure:** N-TH ORDER WEIGHT VECTOR $[\![\vec{\beta}]\!]$

$[\![\vec{\beta}]\!] \leftarrow \text{fill}([\![0]\!], n)$

$[\![\vec{\pi}]\!], [\![\vec{e}]\!] \leftarrow \text{groupByCommon}([\![\vec{t}]\!])$

$[\![Z']\!] \leftarrow \text{sort}([\![Z]\!], [\![\vec{\pi}]\!])$

$[\![\vec{c'}]\!] \leftarrow \text{sort}([\![\vec{c}]\!], [\![\vec{\pi}]\!])$

$\bigcirc$ CALCULATION OF SUM [S] OF FEATURE AMOUNTS OF DEATH EXAMPLES AT EACH POINT OF TIME

$[\![Z'_{dead}]\!] \leftarrow [\![Z']\!] \times [\![\vec{c'}]\!]$

$[\![S]\!] \leftarrow \text{groupBySum}([\![Z'_{dead}]\!], [\![\vec{e}]\!])$

$\bigcirc$ CALCULATION OF THE NUMBER OF DEATH [D] AT EACH POINT OF TIME

$[\![\vec{d}]\!] \leftarrow \text{groupBySum}([\![\vec{c'}]\!], [\![\vec{e}]\!])$

$\bigcirc$ CALCULATION OF $zz^{\mathsf{T}}$

$[\![ZZ']\!] \leftarrow [\![Z']\!][\![Z']\!]^{\mathsf{T}}$

$\bigcirc$ UPDATE OF $[\![\vec{\beta}]\!]$

**for** $i = 0, 1, \cdots, \alpha - 1$ **do**

$[\![\vec{g}]\!], [\![H]\!] \leftarrow \text{calcGH}([\![\vec{\beta}]\!], [\![Z']\!], [\![S]\!], [\![ZZ']\!], [\![\vec{d}]\!], [\![\vec{e}]\!])$

$[\![\vec{\beta}]\!] \leftarrow [\![\vec{\beta}]\!] + [\![H]\!]^{-1}[\![\vec{g}]\!]$

---

EP 4 231 272 A1

Fig. 7

---

**Algorithm 2** GRADIENT AND SECURE COMPUTATION OF HESSIAN

---

1: **Require:** N-TH ORDER VECTOR [β], M X N MATRIX [Z], M X N MATRIX [S],
    M X N X N TENSOR [ZZ], M-TH ORDER VECTOR [D], M-TH ORDER VECTOR [E]

2: **Ensure:** N-TH ORDER VECTOR [G], N X N MATRIX [H]

3:    $[\![{}^{t}\vec{u'}]\!] \leftarrow [\![\vec{\beta}]\!]^{\top}[\![Z']\!]$

4:    $[\![{}^{t}\vec{v'}]\!] \leftarrow \exp([\![{}^{t}\vec{u'}]\!])$

5:    $[\![W']\!] \leftarrow [\![Z']\!] \times [\![{}^{t}\vec{v'}]\!]$ (CORRESPOND TO $\vec{z}\exp(\vec{\beta}^{\top}\vec{z})$)

6:    $[\![\mathcal{X}']\!] \leftarrow [\![\mathcal{Z}\mathcal{Z}']\!] \times [\![{}^{t}\vec{v'}]\!]$    (CORRESPOND TO $\vec{z}\vec{z}^{\top}\exp(\vec{\beta}^{\top}\vec{z})$)

7:    ○ AT EACH POINT OF TIME $\sum_{j \in R_i}$ CALCULATION OF $\exp(\vec{\beta}^{\top}\vec{z}_j)$

8:    $[\![\vec{v}_{gsum}]\!] \leftarrow \text{groupBySum}([\![{}^{t}\vec{v'}]\!]^{\top}, [\![\vec{e}]\!])$

9:    $[\![v_{sum}]\!] \leftarrow \text{sum}([\![\vec{v}_{gsum}]\!])$

10:   $[\![\vec{v}_{psub}]\!] \leftarrow \text{prefixSub}([\![\vec{v}_{gsum}]\!], [\![v_{sum}]\!])$

11:   ○ AT EACH POINT OF TIME $\sum_{j \in R_i}$ CALCULATION OF $\vec{z}_j \exp(\vec{\beta}^{\top}\vec{z}_j)$

12:   $[\![W_{gsum}]\!] \leftarrow \text{groupBySum}([\![W']\!], [\![\vec{e}]\!])$

13:   $[\![{}^{t}\vec{w}_{sum}]\!] \leftarrow \text{sum}([\![W_{gsum}]\!])$

14:   $[\![W_{psub}]\!] \leftarrow \text{prefixSub}([\![W_{gsum}]\!], [\![{}^{t}\vec{w}_{sum}]\!])$

15:   ○ AT EACH POINT OF TIME $\sum_{j \in R_i}$ CALCULATION OF $\vec{z}_j\vec{z}_j^{\top}\exp(\vec{\beta}^{\top}\vec{z}_j)$

16:   $[\![\mathcal{X}_{gsum}]\!] \leftarrow \text{groupBySum}([\![\mathcal{X}']\!], [\![\vec{e}]\!])$

17:   $[\![X_{sum}]\!] \leftarrow \text{sum}([\![\mathcal{X}_{gsum}]\!])$

18:   $[\![\mathcal{X}_{psub}]\!] \leftarrow \text{prefixSub}([\![\mathcal{X}_{gsum}]\!], [\![X_{sum}]\!])$

19:   ○ CALCULATION OF RECIPROCAL $\sum_{j \in R_i} \exp(\vec{\beta}^{\top}\vec{z}_j)$

20:   $[\![\vec{y}]\!] \leftarrow \text{reciprocal}([\![\vec{v}_{psub}]\!])$

21:   ○ CALCULATION OF GRADIENT

22:   $[\![G_{tmp}]\!] \leftarrow [\![W_{psub}]\!] \times [\![\vec{y}]\!]$

23:   $[\![G_{tmp2}]\!] \leftarrow [\![\vec{d}]\!] \times [\![G_{tmp}]\!]$

24:   $[\![G_{tmp2}]\!] \leftarrow [\![S]\!] - [\![G_{tmp2}]\!]$

25:   $[\![{}^{t}\vec{g}]\!] \leftarrow \text{sum}([\![G_{tmp2}]\!])$

26:   ○ CALCULATION OF HESSIAN

27:   $[\![\mathcal{H}_{tmp}]\!] \leftarrow [\![\mathcal{X}_{psub}]\!] \times [\![\vec{y}]\!]$

28:   $[\![\mathcal{H}_{tmp2}]\!] \leftarrow [\![G_{tmp}]\!][\![G_{tmp}]\!]^{\top}$

29:   $[\![\mathcal{H}_{tmp2}]\!] \leftarrow [\![\mathcal{H}_{tmp}]\!] - [\![\mathcal{H}_{tmp2}]\!]$

30:   $[\![H]\!] \leftarrow \text{sum}([\![\mathcal{H}_{tmp2}]\!])$

---

## INTERNATIONAL SEARCH REPORT

| | International application No. |
|---|---|
| | PCT/JP2020/039119 |

A. CLASSIFICATION OF SUBJECT MATTER
G09C 1/00(2006.01)i
FI: G09C1/00 650Z

According to International Patent Classification (IPC) or to both national classification and IPC

B. FIELDS SEARCHED

Minimum documentation searched (classification system followed by classification symbols)
G09C1/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2005/087854 A1 (SHARP CORP.) 24 August 2006 (2006-08-24) paragraph [0247] | 1-7 |
| A | WO 2017/119211 A1 (SONY CORP.) 13 July 2017 (2017-07-13) paragraphs [0026]-[0274] | 1-7 |

☐ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 February 2021 (16.02.2021) | 22 February 2021 (22.02.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| | International application No. |
|---|---|
| | PCT/JP2020/039119 |

| Patent Documents referred in the Report | Publication Date | Patent Family | Publication Date |
|---|---|---|---|
| WO 2006/087854 A1 | 24 Aug. 2006 | US 2008/0114564 A1 paragraph [0240] | |
| WO 2017/119211 A1 | 13 Jul. 2017 | US 2018/0366227 A1 paragraphs [0031]-[0519] EP 3401828 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D.R.COX.** Regression Models and Life-Tables. *Journal of the Royal Statistical Society. Series B (Methodological),* 1972, vol. 34 (2), 187-220